Europäisches Patentamt

European Patent Office

Office européen des brevets

(19)

(11) Publication number: **0 063 461**
**A2**

# (12) EUROPEAN PATENT APPLICATION

(21) Application number: **82301899.9**

(22) Date of filing: **13.04.82**

(51) Int. Cl.³: **G 06 K 7/10**
**G 11 B 7/08, G 03 B 21/11**

(30) Priority: **22.04.81 GB 8112443**
**31.03.82 GB 8209439**

(43) Date of publication of application:
**27.10.82 Bulletin 82/43**

(84) Designated Contracting States:
**BE CH DE FR IT LI NL SE**

(71) Applicant: **Marconi Avionics Limited**
**Marconi House New Street**
**Chelmsford Essex CM1 1PL(GB)**

(72) Inventor: **Hunter, Ian**
**36, Sunningdale Road**
**Chelmsford Essex, CM1 2MH(GB)**

(74) Representative: **Hoste, Colin Francis et al,**
**Marconi House New Street**
**Chelmsford Essex CM1 1PL(GB)**

(54) Data storage arrangement.

(57) A data storage arrangement is suitable for use on board an aircraft and enables a large amount of data to be retrieved quickly as required. The data is stored in the form of linear arrays of opaque and transparent elements on a fiche. The data is accessed by means of a spot of light which travels along the linear array so that the light falling on a photo-detector changes in accordance with the nature of the stored data. The individual data elements are so shaped that any misalignment of the light spot with the linear array can be detected and compensated.

FIG.1.

EP 0 063 461 A2

Croydon Printing Company Ltd.

## Data Storage Arrangement

This invention relates to a data storage arrangement of the kind in which a large amount of data can be readily accessed in a short space of time. A number of kinds of data storage arrangements already exist, but those which are capable of having a very large data storage capacity usually require use of complex moving mechanical parts in order to retrieve the data reasonably quickly. For example, magnetic storage tape is commonly used where large quantities of data are to be handled, but electric motors and the like form an essential part of such a system and their reliability can be limited if they are subject to vibration and shock. The present invention seeks to provide a data storage system which is suitable for use in relatively inhospitale environments, such as may be found on board aircraft.

According to a first aspect of this invention, a data storage arrangement includes a sheet of material carrying data in t he form of a linear array comprising a sequence of two kinds of optically discernible data elements, which correspond to binary data states; a photodetector; optical scanning means for scanning along the linear array with a spot of light so that light falling upon the photodetector varies in accordance with the data stored on said sheet, the data elements being so shaped that scanning misalignment of the spot relative to the. linear array causes the photodetector to output a corresponding misalignment signal; and means utilising said signal to compensate for the misalignment.

According to a second aspect of this invention a store for use with the above data storage arrangement comprises a sheet of material carrying data in the form of a linear array comprising a sequence of two kinds of optically discernible data elements which correspond to binary data states, the data elements being so shaped that when the linear array is scanned with a spot of light scanning misalignments of the spot of light relative to the linear array produce a signal representative of the misalignment.

According to a third aspect of this invention a data reader for use with the above data storage arrangement includes means for holding a sheet of material carrying data in the form of a linear array; optical scanning means for scanning along the linear array; a photodetector arranged to output a misalignment signal indicative of scanning misalignments relative to the linear array; and means utilising said signal to compensate for the misalignment.

Preferably the two kinds of data elements are optically discernible by virtue of having different light transmission properties, although alternatively they could exhibit different light reflection properties.

Although the light transmission properties could be of a colour selective nature, it is preferred that one of the two kinds of data elements is opaque and the other is light transmissive, i.e. transparent or translucent.

Preferably again a plurality of linear arrays are provided in a mutually parallel configuration.

Conveniently the sheet of material comprises a fiche. Fiche are usually termed microfiche or ultrafiche in dependence on the packing density of the data which is recorded upon them, but in any event the fiche is preferably divided into discrete co-planar areas which are termed "pages" or "frames". In this case each frame contains a large plurality of linear arrays of binary data. Fiche having a number of "frames" are referred to in our earlier U.K. patent 1,528,579.

In use the fiche is moved laterally to bring the required page or frame under a reading head, and the data on that frame is then read out sequentially as each linear array is scanned sequentially by the spot of light. The scanning path of a spot of light must accurately follow the track of the linear array, since if it deviates to one side or the other errors will be introduced into the data as it is read out, and it is for this reason that individual data elements are so shaped as to permit deviations and misalignments during scanning to be detected and corrected.

The invention is further described by way of example with reference to the accompanying drawings in which,

Figure 1 shows a data storage arrangement in accordance with the present invention,

Figure 2 shows a fiche in the form of a sheet of material carrying data arranged in discrete frames,

Figure 3 shows a single frame in greater detail,

Figures 4 and 5 illustrate in greater detail the nature of the data elements which are stored within each frame, and the corresponding electrical signals which are generated when the stored data is read, and Figure 6 shows an alternative data storage arrangement.

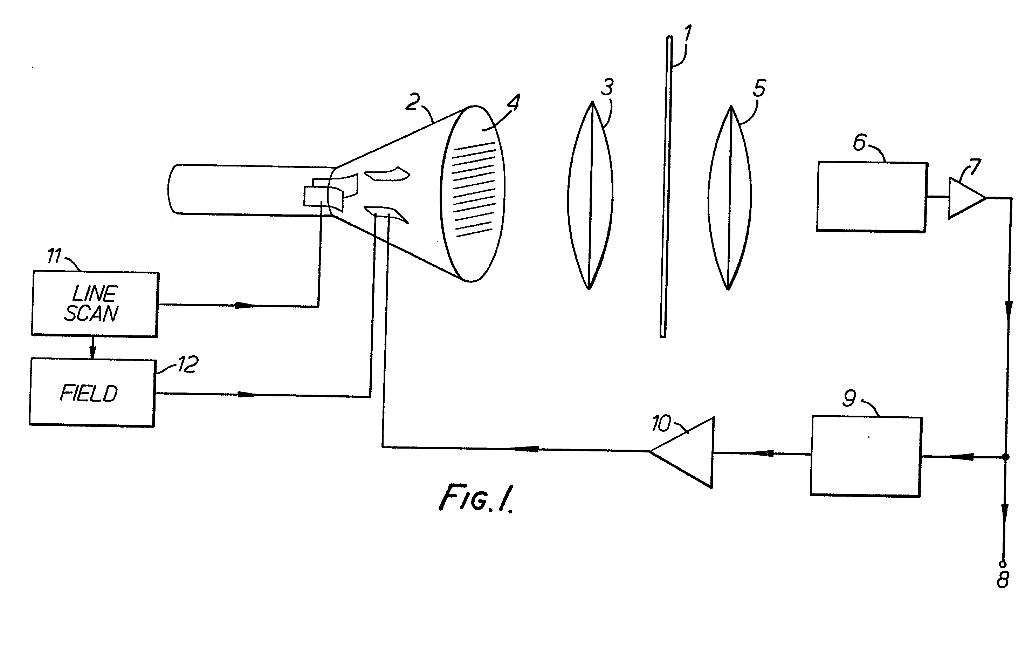

Referring to Figure 1, a sheet of optically transparent material termed a fiche 1, carries optical data in the form of a pattern of opaque and transparent elements set out as a plurality of linear arrays arranged in discrete frames. The fiche 1 is mounted in front of a cathode ray tube 2 with a lens 3 positioned between them so as to focus the screen 4 of the tube 2 onto the object plane of the fiche, which typically lies a little below the outer surface of the fiche itself. The cathode ray tube 2 is arranged to scan its electron beam in a television-like raster and it is the moving spot of light traced out by the electron beam on the screen 4 which is focused by means of the lens 3 on to the surface of the sheet 1. When the spot of light falls upon an opaque element of the fiche 1, no light passes through it. Conversely, light passes through the fiche when the spot falls upon a transparent element and this light is collected by a further lens 5 and concentrated upon the photosensitive target of a photocell 6. It is arranged that the focal plane of the lens 5 is displaced a little from the surface of the fiche 1 so that blemishes on the surface of the fiche are not brought to a focus at the photocell 6. Instead the lens 5 serves to collect light in an efficient manner and to concentrate it upon the photosensitive target. Thus as the electron beam in the cathode ray tube 2 traces out its raster-like scanning pattern, a sequence of light and dark falls upon the photocell 6 in accordance with the data pattern stored by the fiche 1.

The electric signal generated at the photocell 6 in response to the level of light falling upon it is amplified at an amplifier 7 and passed to an output terminal 8 for utilisation.

The output signal of the amplifier 7 is also passed to a detector 9, which is able to produce a control signal which is indicative of any misalignments which occur when the lines of the television-like raster pattern do not coincide exactly with the corresponding linear arrays formed on the fiche 1. This control signal is passed via a further amplifier 10 to the deflection circuits of the cathode ray tube 2.

In order to produce the television-like raster scanning pattern, the electron beam within the cathode ray tube 2 is deflected in accordance with line and field deflection signals, which are generated at a line scan circuit 11 and at a field scan circuit 12 respectively which operate in synchronism. The output of the amplifier 10 is also applied to the deflection plates within the cathode ray tube 2 so as to slightly modify the field deflection signal as required to compensate for scanning misalignments and deviations that occur. The nature of the required correction can better be understood by reference to the subsequent drawings.

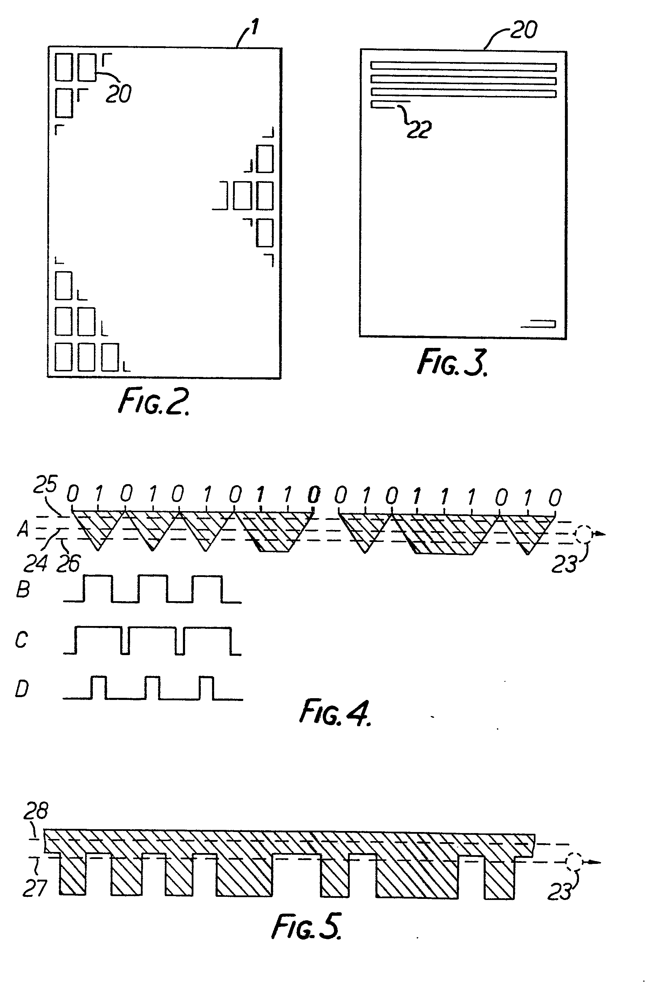

Referring to Figure 2, the fiche 1 is a thin transparent sheet containing typically several thousand individual pages or frames 20 of data. Fiche of this kind are known and are usually termed microfiche or ultrafiche dependent on the number and size of individual data frames which they carry. Fiche are described in, for example, our U.K. patent 1,528,579 referred to previously. The fiche 1 contains registration marks (not shown) so that it can be moved laterally from side to side and up and down to bring a required frame of data into the field of view of the read head which comprises the cathode ray tube 2 and the photocell 6. In Figure 2, the individual frames are indicated diagrammatically by the small rectangles 20, of which only a few are illustrated. In practice, about 3,500 frames would be provided on a fiche having an overall dimension of about 100 mm. by 150 mm., with the surface area occupied by each frame being about 1.8 mm. by 2 mm.

An individual frame of data is illustrated in greater detail in Figure 3. Data is carried in the form of a number of separate tracks each of which is arranged as a linear array 22. Typically, there would be several hundred linear arrays of data arranged vertically one above the other to occupy nearly the whole of the frame area. Each linear array consists of a sequence of binary data bits which are coded in an appropriate way, and typically an opaque element represents a logic 1 level and a transparent element represents a logic 0 level. Two examples of data element format in accordance with the present invention are illustrated in Figures 4 and 5.

Referring to line A of Figure 4, the fiche as a whole is transparent with localised opaque marks formed on or just below one surface thereof. Each isolated logic 1 bit comprises an opaque triangle, whereas a logic 0 level is represented by the transparent space between two opaque triangles. Various sequences of 1's and 0's are illustrated, and it will be seen that the triangular shape is modified when two consecutive logic 1's occur. Ideally the light spot 23 generated by the electron beam of the cathode ray tube 2 tracks centrally along the linear array along the path indicated by the broken line 24 and the corresponding electrical signal generated by the photocell 6 is shown in line B of Figure 4. It will be seen that this electrical signal consists of a sequence of pulses having a one to one mark-space ratio when a continuous sequence of alternate logic 1 levels and logic 0 levels is being scanned. However, if the spot of light deviates from the central path 24, the mark-to-space ratio will alter. For example, if the spot of light follows the path 25, the mark-to-space ratio is as shown in line C of Figure 4, whereas the path 26 produces the pulse train shown in line D. The pulse train generated by the photocell 6 is passed to the detector 9 which monitors the mark-to-space ratio of the pulse sequence and generates a control signal which is applied so as to modify the field deflection of the cathode ray tube to bring the spot of light back on to the central line 24.

An alternative optical pattern is as shown in Figure 5 and ideally the spot of light is arranged to follow the line indicated by the broken line 27. Deviation of the spot of light above or below this track will increase or reduce the mark-to-space ratio of the output pulses. In this case the detector 9 must be d.c. coupled to the output of the amplifier 7, since the absolute value of the signal must be preserved to allow for the possibility that the light spot deviates to travel over the solid opaque stripe, e.g. path 28. For this reason, the pattern shown in Figure 4 is to be preferred as the photocell 6 and the detector 9 can then be a.c. coupled, thereby avoiding difficulties associated with d.c. drift.

It will be appreciated that a continuous string of opaque elements or a string of transparent elements is not acceptable, and therefore the data is stored in a suitably coded form in which these conditions do not arise. Thus the data is stored in a form which does not correspond literally to the information content of the fiche, but which has been subject to a coding operation prior to entering the data on the fiche. A converse decoding operation is, of course, required subsequent to terminal 8 before the read out data is utilised. One suitable code is a modification of the Miller code - it is known as $M^2$ code, and a suitable encoder is produced by Ampex Corporation, U.S.A. The $M^2$ code is such that whatever the nature of the information content of the code bit sequence, the maximum number of consecutive bits that can occur in the stored bit pattern between successive signal level transitions is limited to three. This permits the signal generated at the photocell 6 to be a.c. coupled, and moreover permits the detector 9 to monitor variations in the mark-space ratio to effect compensation for tracking errors.

The raster pattern produced for conventional television purposes consists of line scans which slope slightly down so that at the end of one line the electron beam flies rapidly back in a true horizontal path to begin the next line scan. Although such a raster pattern could be used to scan a fiche in accordance with this invention, it would result in inefficient utilisation of the available frame area.

Preferably therefore the raster pattern is arranged to consist of true horizontal lines with the electron beam being abruptly deflected down to the beginning of the next line during its flyback period.

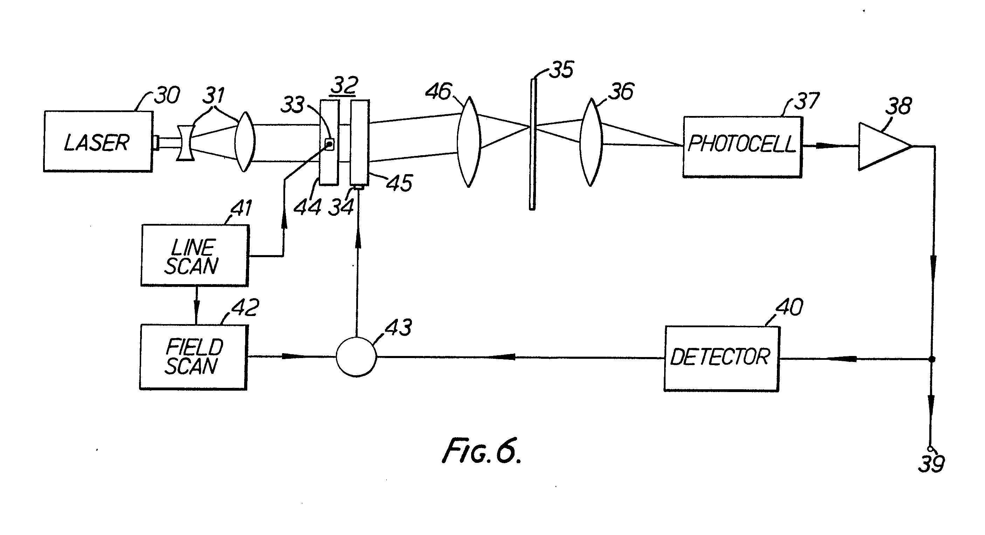

Although in Figure 1 the fiche is illustrated as being scanned by a spot of light from a cathode ray tube, other possibilities exist, and under some circumstances the use of a scanning laser beam may be advantageous. Such an arrangement is illustrated in Figure 6. A laser 30 is used to generate a very narrow beam of coherent light. On leaving the laser, the beam is slightly divergent in conventional manner, and the beam is passed through an optical lens system 31 in order to produce a parallel sided beam of light of finite width which is incident upon an optical deflection device 32. The device 32 consists of two bulk effect Bragg cells 44, 45, but other alternative devices could be used. The degree of angular deflection imparted to the laser beam is a function of the frequency of oscillatory signals applied to the cells by piezoelectric transducers 33, 34, positioned on the periphery of the cells and off-set by 90° from each other. One transducer 33 is positioned to determine the amount of angular deflection in the "line" direction, and the other transducer 34 determines deflection in the "field" direction (by analogy with the cathode ray tube of Figure 1).

It may be possible to combine the two cells 33 and 34 into a single cell having the two transducers mounted at its periphery at 90° to each other. With the two-cell arrangement illustrated, it may be advisable (depending on the performance of the cells) to clip undeflected light passing through the cell 33, and to reform the deflected light into a parallel beam before it is applied to the second cell 34.

The deflected laser beam is focussed onto the fiche 34 by the lens 46. Light passes though a particular location of the fiche 35, and the light is channelled via a further lens 36 to a photocell 37 which corresponds to the photocell 6 of Figure 1. By exact analogy with Figure 1, the photocell output signal is fed via an amplifier 38 to an output terminal 39 and also to a detector 40.

The two transducers 33 and 34 are driven by "line scan" and "field scan" circuits 41 and 42. A scan correction signal is generated by the detector 40 to compensate for deviations between the scanning path of the laser and a line of data stored on the fiche, and this correction signal is combined with the line scan signal at a combiner 43 so as to modify it as necessary. The degree of optical deflection provided by a bulk effect Bragg cell is dependent on the frequency imported to it by each transducer 33, 34. Typically the Bragg cell comprises tellurium dioxide, lithium niobate or zircomium niobate and the deflection frequencies are imparted to it by piezo-electric transducers 33, 34. Thus the detector 40 generates a frequency representative of the scanning error, so as to modify the frequency of the field scan signal slightly to compensate.

CLAIMS:-

1. A data storage arrangement including a sheet of material carrying data in the form of a linear array comprising a sequence of two kinds of optically discernible data elements, which correspond to binary data states; a photodetector; optical scanning means for scanning along the linear array with a spot of light so that light falling upon the photodetector varies in accordance with the data stored on said sheet; the data elements being so shaped that scanning misalignment of the spot relative to the linear array causes the photodetector to output a corresponding misalignment signal; and means utilising said signal to compensate for the misalignment.

2. An arrangement as claimed in claim 1 and wherein the two kinds of data elements are optically discernible by virtue of having different light transmission properties.

3. An arrangement as claimed in claim 2 and wherein one of the two kinds of data elements is opaque and the other is light transmissive.

4. An arrangement as claimed in claim 1, 2 or 3 and wherein a plurality of linear arrays are provided in a mutually parallel configuration.

5. An arrangement as claimed in any of the preceding claims and wherein the sheet of material is a fiche which is divided into a plurality of discrete co-planar areas.

6. An arrangement as claimed in claim 5 and wherein each area contains a large plurality of linear arrays of binary data.

7. An arrangement as claimed in any of the preceding claims and wherein output of the photodetector is fed to a signal detector which monitors its mark-space ratio to detect misalignments.

8. An arrangement as claimed in any of the preceding claims and wherein the data elements are so shaped that when they are scanned the photodetector produces a pulse

0063461

train in which the mark-space ratio is related to any misalignment.

9. An arrangement as claimed in claim 8 and wherein one of said kinds of optically discernible data elements is in the form of an opaque wedge, and the other of said kinds is represented by light transmissive spaces between such wedges.

10. An arrangement as claimed in claim 8 and wherein said linear array includes a continuous opaque stripe aligned with the direction of the array, and one of said kinds of optically discernible data elements is in the form of a local change in the width of the stripe, and the other of said kinds is represented by the absence of such a change.

11. A data storage arrangement as claimed in any of the preceding claims in which a laser beam is used to scan the data stored on said sheet.

12. A data storage arrangement as claimed in claim 11 in which a bulk effect Bragg cell device is used to deflect the laser beam to cause it to scan said data.

13. A data storage arrangement as claimed in claim 12 in which said device comprises two Bragg cells each arranged to deflect the laser beam in mutually orthogonal directions.

14. A data storage arrangement as claimed in claim 13 and wherein scanning misalignments cause a compensating frequency shift in a deflection signal applied to one of said cells.

15. A store for use with the data storage arrangement as claimed in any of the preceding claims and consisting of a sheet of material carrying data in the form of a linear array comprising a sequence of two kinds of optically discernible data elements which correspond to binary data states, the data elements being so shaped that when the linear array is scanned with a spot of light scanning misalignments of the spot of light relative to the linear array produce a signal representative of the misalignment.

16.    A data reader for use with a data storage arrangement as claimed in any of claims 1 to 14 and including means for holding a sheet of material carrying data in the form of a linear array; optical scanning means for scanning along the linear array; a photodetector arranged to output a misalignment signal indicative of scanning misalignments relative to the linear array; and means utilising said signal to compensate for the misalignment.

FIG.1.

1/3

0063461

FIG.2.

FIG.3.

FIG.4.

FIG.5.

0063461

Fig.6.